# EUROPEAN PATENT SPECIFICATION

(11) **EP 2 621 220 B1**
(45) Date of publication and mention of the grant of the patent: **30.09.2015**
(21) Application number: 12152890.5
(22) Date of filing: 27.01.2012
(51) Int. Cl.: H04W 48/16

(54) **Assisted system scanning with paired devices**
Unterstützte Systemabtastung mit gepaarten Vorrichtungen
Balayage de système assisté avec des dispositifs appariés

(43) Date of publication of application: 31.07.2013
(73) Proprietor: BlackBerry Limited, Waterloo, ON N2K 0A7 (CA)
(72) Inventor: Ekici, Ozgur, Kanata, Ontario K2K 3K1 (CA); Islam, Muhammad Khaledul, Kanata, Ontario K2K 3K1 (CA)
(74) Representative: Moore, Barry

(56) References cited:
- EP-A1- 1 959 697
- EP-A2- 1 246 487
- WO-A1-2005/008969
- WO-A1-2007/147451
- GB-A- 2 410 153
- US-A1- 2011 256 869
- GRYAZIN E A: "Service Discovery in Bluetooth", INTERNET CITATION, 9 November 2001 (2001-11-09), XP002311799, Retrieved from the Internet: URL:http://citeseer.ist.psu.edu/392311.htm l [retrieved on 2004-12-22]

## Description

### FIELD OF THE DISCLOSURE

The present invention relates generally to wireless devices, and more particularly to wireless system scanning in mobile communication devices.

### BACKGROUND

Many different types of wireless devices exist today. Increasingly, many of these devices are mobile and powered by battery which has limited capacity compared to fixed wireless devices that may be powered directly from an electrical outlet. The battery-powered wireless devices include but are not limited to mobile phones, smart phones, laptop computers, and tablet computers. Users may carry and use more than one battery powered wireless device at once. For example, a user may carry and use both a smart phone and a tablet computer. It is possible for such devices to have one or more wireless capabilities in common. For example, two wireless mobile devices may both have cellular capabilities, wireless local area network (WLAN) or Wi-Fi™ capabilities, Bluetooth™ capabilities, etc.

Furthermore, it is possible for wireless devices that are located in proximity to one another to communicate directly with each other over an established communication link like Bluetooth™ or Universal Serial Bus (USB). In such an instance, these devices are hereinafter referred to as being "paired" together. The communication link between devices allows the devices to exchange information for one or more purposes. Such purposes can include the transfer of data or files from one device to another, the synchronization of applications or data such as email synchronization status and program settings, among others.

In some instances, a user's two wireless devices may attempt to use the same wireless access capability. Before a wireless connection can be established, it is common for a wireless device to carry out a scanning process in search of available networks. In such a situation, both devices will undertake a scanning process in search of available networks including user-owned cells, networks available on supported Radio Access Technologies (RATs) including cellular, WiFi, etc. This situation can be further described using the following example in which two devices wish to connect to a Wi-Fi network. In such instances, both devices will use their Wi-Fi radio in an attempt to find and connect to a Wi-Fi access point. This procedure involves active or passive scanning for Wi-Fi access points, and then if one is found, connecting to the access point. This work is energy intensive and consumes significant battery power of both devices.

EP 1 246 487 A2 describes independent radio communication devices that can share network information directly with each other in the local area using an independent wireless link. This network information encompasses synchronisation information, interference, network configuration, neighbour cell list, paging requests, etc., and can be relevant to multiple networks, frequency carriers and/or air interface modes. Sharing the information reduces the processing requirement, the power consumption, and the bandwidth consumption of devices.

U.S. 2011/256869 A1 discloses methods, program products, and systems of peer-to-peer assisted network searching. In general, in one aspect, a first mobile device can request cellular connectivity configuration information from one or more second mobile devices over a personal area network. The first mobile device can receive the cellular connectivity configuration information from the one or more second mobile devices. From the received cellular connectivity configuration information, the first mobile device can identify a cellular connectivity configuration that is compatible with the first mobile device. The first mobile device can select a cellular network to connect to using the identified cellular connectivity configuration.

GB 2410153 A provides a collaborative discovery method for use by a plurality of communication devices (MD1 to MD5), wherein network service information (NSI1) discovered by any device (eg MD1) of the plurality is made available for sharing with and discovering by at least one other device of the plurality (eg MD2 to MD4) by transmitting the network service information (NSI1) wirelessly to the at least one other device (MD2 to MD4), the network service information (NSI1) relating to at least one of a network (N1 to N3) over which a device of the plurality can communicate and a service (SI, S2) which a device of the plurality can use. The network service information comprises network configuration date (operating frequency range, physical layer characteristics, network performance data, quality of service data) relating to a network that enables a device to be configured to communicate over that network.

### SUMMARY

The present disclosure provides a method in a first wireless device, the method comprising: recognizing a second wireless device; identifying the first wireless device as at least one selected device to perform wireless network scanning to discover available wireless networks; performing the wireless network scanning; and communicating results of the scanning to the second wireless device, the results containing information to enable the second wireless device to connect to at least one of the available wireless networks without the second wireless device having to perform the same wireless network scanning.

The present disclosure further provides a method in a first wireless device, the method comprising: recognizing a second wireless device; identifying the second wireless device as at least one selected device to perform wireless network scanning to discover available wireless network; and; receiving results of wireless network scanning performed on the second wireless device, the results containing information enabling the first wireless device to connect to at least one available wireless network discovered during the scanning without the first wireless device having to perform the same wireless network scanning.

The present disclosure further provides a wireless device comprising: a processor; a memory storing therein computer readable instructions; and at least one wireless communication interface for communicating with one or more wireless networks, wherein the processor is configured to execute the computer readable instructions to cause the wireless device to recognize a second wireless device; identify the wireless device as at least one selected device to perform wireless network scanning to discover available wireless networks; perform the wireless network scanning; and communicate results of the scanning to the second wireless device, the results containing information to enable the second wireless device to connect to at least one of the available wireless networks without the second wireless device having to perform the same wireless network scanning.

The present disclosure further provides a wireless device comprising: a processor; a memory storing therein computer readable instructions; and at least one wireless communication interface for communicating with one or more wireless networks, wherein the processor is configured to execute the computer readable instructions to cause the wireless device to recognize a second wireless device; identify the second wireless device as at least one selected device to perform wireless network scanning to discover available wireless network; and; receive results of wireless network scanning performed on the second wireless device, the results containing information enabling the first wireless device to connect to at least one available wireless network discovered during the scanning without the first wireless device having to perform the same wireless network scanning.

### BRIEF DESCRIPTION OF THE DRAWINGS

The present disclosure will be better understood having regard to the drawings in which:
**Figure 1** **is** a block diagram representing an exemplary wireless network according to one aspect of the present disclosure
Figure 2 is a flow chart showing steps of a method according to one aspect of the present disclosure;
Figure 3 is a block diagram representing an exemplary wireless local area network according to one aspect of the present disclosure;
Figure 4 is a block diagram representing an exemplary telecommunications architecture comprising a Closed Subscriber Group network according to one aspect of the present disclosure; and
Figure 5 is a block diagram representing a mobile device according to one aspect of the present disclosure.

### DETAILED DESCRIPTION

One or more embodiments of the present disclosure disclosed herein are described with reference to two wireless devices. However, this number of devices is not meant to be limiting. It is contemplated that the present disclosure may be implemented with three or more wireless devices.

In one aspect, the present disclosure provides for a wireless device, but the disclosure is not meant to be limited to any particular wireless device. Examples of wireless devices include but are not limited to data enabled cellular telephones, smart phones, personal digital assistants, tablet computers, and laptop computers.

The various features and components of the present disclosure are now described with reference to the Figures.

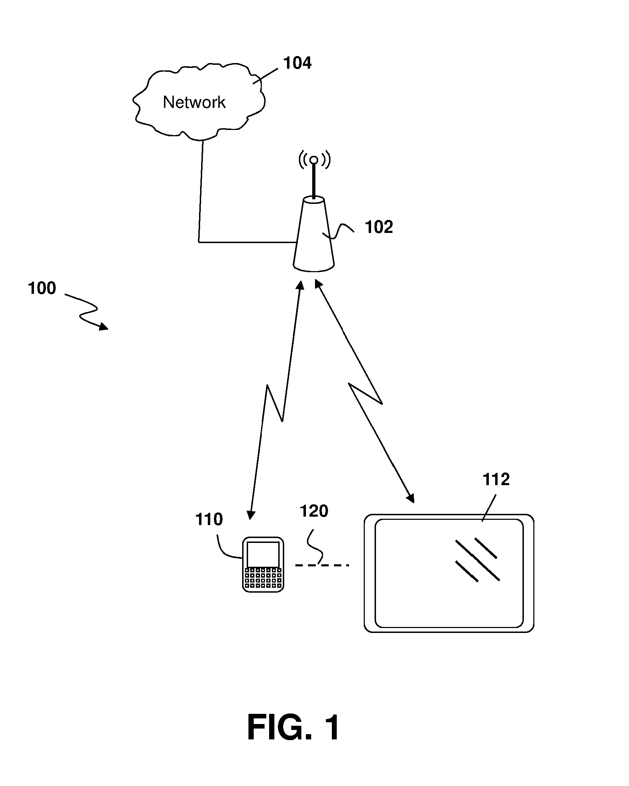

Reference is now made to **Figure 1****,** which shows a block diagram representing an exemplary wireless network **100** having a wireless access point **102** and first and second wireless devices **110, 112.** Wireless access point or base station **102** can be an access point in any type of wireless network or technology, including but not limited to Wi-Fi, WiMAX™, a cellular network, and a home network. In addition, wireless access point or base station **102** may be connected to another network **104,** such as for example a wireless local area network (WLAN), the internet, a telecommunications network, etc. Although only two wireless devices are shown in wireless network **100,** in at least one embodiment network **100** can have one or more other computing devices.

In the present disclosure, the wireless devices may be of any type capable of wireless communications, including but not limited to data enabled cellular telephones, smart phones, personal digital assistants, tablet computers, and laptop computers. In at least one embodiment, one or more of the wireless devices are battery powered devices.

For example, wireless devices **110** and **112** depicted in **Figure 1** may be a tablet computer and a smart phone, respectively. It is becoming more common for a user to carry and operate two or more wireless devices. For instance, a user may prefer to use a smart phone for voice communications and text messaging, and to use a tablet computer for more involved tasks such as emailing, web browsing, document editing, virtual private networking, video conferencing, to name but a few. Thus in such cases where the two wireless devices are used by the same user, have similar user profile details and credentials, the devices will normally be located and operated in roughly the same physical location. As a result, the two wireless devices may be able to access one or more of the same wireless networks.

In some cases, the two or more wireless devices will be associated with the same entity or user. The entity could be a business or other organization, and the user could be an individual. It is possible that the devices are associated with a single user account. The person or entity with which a device is associated may be used in an identification and/or authentication procedure when there is an attempt to set up a communication link between two wireless devices. The establishment and use of a communication link between two proximally located wireless devices is discussed further below.

In at least one embodiment, each of the two wireless devices may have a wireless interface for carrying out wireless communications. The wireless interface can permit the wireless device to communicate with another equipment, such as an access point or a base station. One such example is wireless access point or base station **102** shown in **Figure 1****.** Each device may support one or more wireless technologies, such as Code Division Multiple Access (CDMA), Wideband CDMA (W-CDMA), Global System for Mobile (GSM), GSM Packet Radio Service (GPRS), Universal Mobile Telecommunications Service (UMTS), Evolution Data Only (EVDO), Long Term Evolution (LTE), LTE Advanced (LTE-A), High Speed Downlink Packet Access (HSDPA), Wi-Fi, and WiMAX. It is to be appreciated that this list is merely exemplary and is not meant to be limiting.

In addition to carrying out wireless communications as discussed above, it is contemplated in the present disclosure that the two wireless devices, which are located in proximity to one another, are capable of communicating with each other over a communication link. For example, **Figure 1** depicts a connection between devices **110, 112** via communication link **120.** The communication link between devices allows the devices to exchange information for one or more purposes. Such purposes can include the transfer of data or files from one device to another, the synchronization of applications or data such as email and program settings, the establishment and control of wireless connections, and the collaboration of the devices to complete other tasks.

In some instances, a communication link will be or has been established between the two devices. In such a case, the two devices are hereinafter referred to as being "paired" together. In addition, the skilled person will appreciate that the communication link between the two devices can be unsecured or secured.

Communication link **120** between devices **110** and **112** may comprise any short or long range wired or wireless connection, and examples of such connections include Bluetooth™, universal serial bus (USB), Infrared Data Association (IrDA), Wi-Fi, Radio-frequency identification (RFID), Near Field Communication (NFC) connections. Other types of connections are possible.

In some instances, the two wireless devices will attempt to communicate over the same wireless network. For example, devices **110** and **112** may both attempt to connect to a Wi-Fi network. In this example, each of the two devices will use its radio autonomously (i.e. with no end user interaction) in an attempt to find and connect to a Wi-Fi access point. This process involves scanning for Wi-Fi access points, and then if one is found, establishing a connection with the access point. The scanning process is typically energy intensive and thus can consume significant battery power of each wireless device. Thus in the aforementioned situation, both devices scan for available Wi-Fi networks independently of one another. Since both devices are located in proximity to each other, the devices will, in many cases, both be within the physical range of one or more available Wi-Fi networks. Thus at least some of the results of the scan on each device will be the same. In the present Wi-Fi example, the results can contain the profiles or identifiers of one or more Wi-Fi networks identified during the scan. Therefore since the results of the Wi-Fi scan can be similar or identical on both wireless devices, the process of simultaneous scanning on both devices is an inefficient use of battery power on one of the devices. Consequently the scanning process on the second device is redundant if the second device has access to the scanning results obtained on the first device. In such a case, the battery power of the second device is consumed needlessly.

Therefore according to one aspect of the present disclosure, the above-noted redundancy can be minimized or eliminated by performing the scanning on one of the two paired wireless devices, and then sharing the results of the scan with the other of the two paired devices.

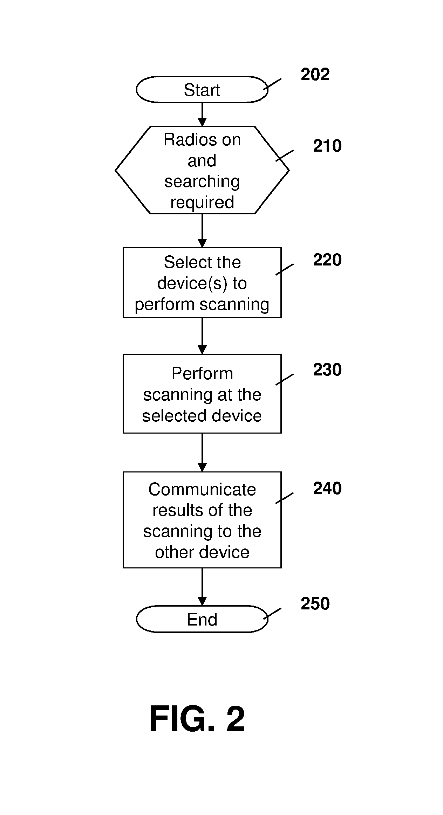

The basic steps of a method according to one aspect of the present disclosure are shown in **Figure** 2.In the embodiment of **Figure 2**, it is assumed that the mobile devices have radios that are turned on, but the considered radio access technology (RAT) is unavailable in the communications environment, thus necessitating searching, as shown by block **210**.

Specifically, **Figure 2** provides a flow chart which starts at block **202** with the preconditions of block **210,** and proceeds to block **220.** In block **220** one of the two or more wireless devices is selected to perform the wireless network scanning.

The process then proceeds to block **230** where the selected wireless device performs the scanning.

The process then proceeds to block **240** where the results of the scanning are communicated to the other of the wireless devices. In one embodiment, if there is no network or RAT found, such results are not communicated with the other device.

The process then proceeds to block **250** and ends.

The above method is now described in more detail.

As discussed above, in at least one aspect of the present disclosure there are at least two wireless devices, the devices are proximally located, and the devices are capable of communicating with one another. The two devices are aware of one another or are able of discovering each other. Solutions to this latter requirement are known to those skilled in the art. For example, the two devices may be capable of discovering each other wirelessly via Bluetooth, WLAN, etc., or over a wired connection, such as USB. Other solutions are possible.

Once the two wireless devices are aware of one another, each of the two devices may know or be capable of learning of the wireless capabilities of the other device. The devices in some instances will need to know of each other's wireless capabilities before there can be an attempt to perform the wireless scanning at only one of the devices. For example, if it turns out that the devices do not share any wireless capabilities in common, then it may not be possible to perform the scanning process at only one of the devices. On the other hand, it may be possible to do so when the two devices share one or more wireless capabilities. For example, if both devices are Wi-Fi enabled, then it will be possible to carry out the Wi-Fi scanning task at only one of the devices.

The wireless capabilities of a device may be communicated to the other device over a communication link between the two devices. For Example, each device may by default provide its communication capabilities, battery capacity and/or level, battery status or other relevant information (such as being charged from wall charger etc.) to the other device. Once a connection has been established between the two devices, the devices are "paired" together. This was described above with reference to **Figure 1**. It is also possible that the two devices have previously been in communication, and thus are already aware of each other's wireless capabilities. In such a situation, the devices need not exchange information on their wireless capabilities each time the two devices are connected together.

In another embodiment, it is possible that only one of the devices learns of the other device's wireless capabilities. In such an embodiment, a first device may be designated to perform the scanning. Thus the first device will need to know of the wireless capabilities of the second device. However, the second device need not necessarily know of the wireless capabilities of the first device.

In many situations, the two paired devices will want to connect to a wireless network of the same type. According to one aspect of the present disclosure, this situation will be recognized and there will be an attempt to have the scanning process performed on only one of the devices. Having reference to **Figure 2**, a first block **220** in a method of the present disclosure involves selecting a one of the first and second wireless devices to perform the scanning.

In a further embodiment, scanning may be shared between the devices. For example, in WLAN devices, a first device may scan 802.11 b/g and a second device will scan 802.11 a. At the end of the scanning the devices exchange results. From **Figure 2****,** the allocation of the scanning can be done at block **220,** the scanning performed at each of the devices at block 230, and the sharing of the results at block **240.**

The selection of the specific wireless device that is to perform the scanning can be based on any criterion or criteria. In at least one embodiment of the present disclosure, both first and second wireless devices will be battery powered. In this embodiment, the selection of the device that is to perform the scanning will be based at least partly on the battery properties of the devices. For example, the selection can be based on the relative battery energy storage capacities of the first and second wireless devices. One measure of battery storage capacity is the electric charge capacity of the battery. For example, in many battery powered electronic devices, the electric charge of a battery is expressed in the unit milliampere-hour (mAh). In many instances, it will be desirable to select as the scanning device the device having the greater battery storage capacity. For example, a tablet computer will typically have a larger battery capacity than a smart phone. Thus in such a case it may be desirable to have the tablet computer perform the scanning.

In another embodiment, the selection of the device to perform the scanning can be based on the relative battery energy levels of the first and second wireless devices. The term "battery energy level" refers to the amount of energy remaining in a battery. Thus in at least one embodiment of the present disclosure, the device selected to perform the scanning can be the one having the greater battery energy level.

It is also possible to use other battery measurements or characteristics in selecting the device that will perform the scanning. For example, one measure that may be used is the proportion of the amount of energy remaining in the battery to the overall capacity of the battery. This measure can be referred to as battery "charge level". For example, it common to refer to the charge remaining in a battery by way of a percentage (e.g. a battery is at 70% of capacity). In such a case, the device that is to perform the scanning can be selected based on the relative charge levels of the batteries of the two devices. In at least one embodiment, the device having the greater charge level is selected to perform the scanning.

Where the selection of the device that is to perform the scanning is based on characteristics of the batteries of the two devices, it will be necessary for there to be an exchange of battery information between the two devices. This can occur when the two wireless devices initially connect to one another, or at a later time, such as when it is recognized that the two paired devices wish to connect to a wireless network of the same type. Signalling may thus exist to request or provide information between the devices.

The actual selection or designation of the device to do the scanning can be carried out in one of several different ways. For example, in at least one embodiment, the selection or designation of one of the two wireless devices as the scanning device can be performed at one of the devices. As discussed above, the selection may be based on one or more criteria, including battery related characteristics of the devices. Such conditions can be provided within software loaded onto the device at the time of manufacture or later provisioned to the device, for example. In addition, the information on which the selection is based may be stored on one or more of the two devices, and/or it may be entered by a user of one of the devices. For example, the selection can be based on user-inputted information. For instance, a user may input into one of the devices a selection to have the device having the larger battery capacity to perform the scanning. In another situation, a user may directly designate the device that is to do the scanning. Other options for selecting the scanning device are possible.

After the device that is to do the scanning has been selected, the selected device performs the scanning in search of one or more wireless networks. This is shown in block **230** in **Figure 2****.** The type of scanning that is performed will depend on the type of wireless network the two devices are attempting to connect to. For example, if the devices are seeking to connect to a Wi-Fi network, the scanning device will scan for available Wi-Fi networks. In another example, if the devices are seeking to connect to a user owned smaller area cell (also referred to as a femtocell or a Closed Subscriber Group (CSG)), the scanning device will scan for available femtocells. In a further example, both mobile devices may support Third Generation (3G) and Second Generation (2G) networks, supporting 3G bands 1,2,5,6 and 2G GSM 850, 900, 1800 and 1900. If both devices are turned on simultaneously in a new location, the devices can share network scanning responsibility. For example, a first device can scan the 2G RAT while the second device can scan the 3G RAT, and the results can then be shared. Such implementation may increase the system scan efficiency by multi-party measurements.

In at least one embodiment of the present disclosure, the scanning process on the selected device will only commence or proceed while the battery energy level of the selected device is above a specific threshold. For example, a user may not want the device to perform any battery intensive scanning if the battery energy level is at or below a certain critical threshold. The specific threshold can be set in any suitable way, including being inputted by a user.

In addition, if and when the battery energy level of the selected wireless device reaches or falls below the specific threshold, a scanning-ceased indicator can be communicated from the selected device to the other device, possibly over the communication link between the two devices. The scanning-ceased indicator can indicate to the other device that the wireless network scanning at the selected wireless device has ceased. The other device may then determine if wishes to perform its own network scanning.

In addition, the scanning may involve one or both of active and passive scanning. As will be appreciated by those skilled in the art, active scanning involves sending request or probe signals on one or more channels or frequencies, and then waiting for a response. On the other hand, passive scanning involves listening on a specific channel or frequency for one or more periodic beacon transmissions from an access point or base station.

Once the scanning has been carried out, the scanning device will have the results of the scan. The results will include information on the available wireless networks. In the case where no wireless networks were identified, the results can indicate this outcome. The information on the available networks may include an identifier and/or a profile of each network. The information may also include other information for each available wireless network, such as for example connection and/or transmission parameters. In at least one embodiment of the present disclosure, the results will contain sufficient information on one or more of the available wireless networks to enable the other (i.e. non-scanning device) to connect to one of the networks without having to perform any scanning on its own.

Once the wireless network scanning has been performed, the results of the search can then be communicated to or otherwise shared with the other device. In a further embodiment, the searching may continue and the results reported only in a searched network is found. This is shown in block **240** in **Figure 2****.**

In at least one embodiment, the results will be communicated between the two devices **110, 112** over communication link **120.** The communication of the results may be accomplished in any suitable way. For example, the device that performed the scanning can push the results over to the other device. Another option is to have scanning device notify the other device that the scanning is complete. The other device may then request the results from the scanning device. In yet a further embodiment, the other device may poll the scanning device for the results. Other solutions are possible and are within the knowledge of the skilled person.

As mentioned above, in at least one embodiment of the present disclosure, the results of the scanning will contain sufficient information on one or more of the available wireless networks to enable the other (i.e. non-scanning device) to connect to one of the networks without having to perform any scanning on its own. This will enable the non-scanning device to connect to an available wireless network without having to carry out the battery intensive scanning process.

After the scanning process is complete, one or both of the devices can establish a connection with one or more of the networks identified during the scan.

In the disclosure below, several aspects of the present disclosure are described with reference to two different exemplary wireless network architectures.

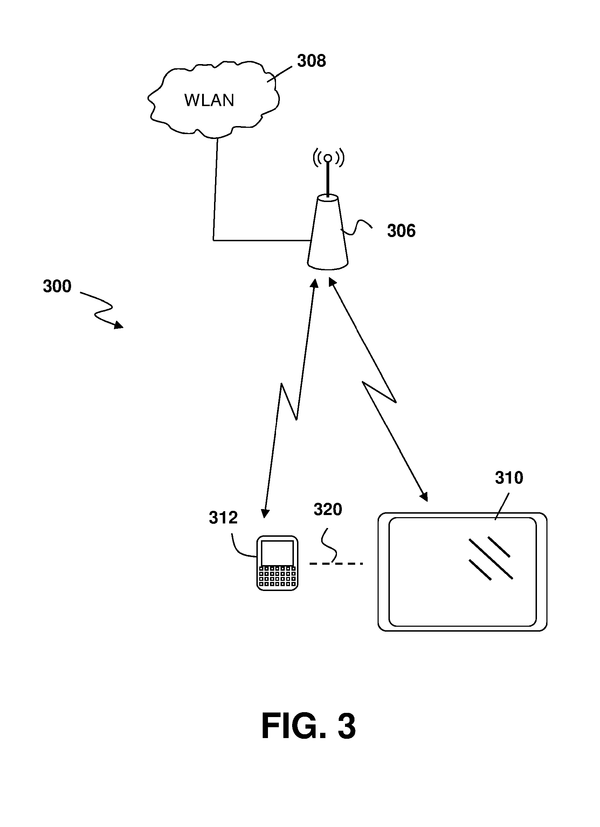

Reference is now made to **Figure 3****,** which shows a block diagram representing an exemplary wireless local area network (WLAN) **300** comprising an access point **306** and first and second wireless devices **310, 312.** Devices **310, 312** are interconnected by way of communication link **320.** Access point **306** may be connected to another network **308,** such as for example a local area network (LAN), the internet, etc. Although only two wireless devices are shown in WLAN **300,** it is to be appreciated that WLAN **300** can have one or more other computing devices, such as mobile devices and other types of wireless devices.

One or more of the methods of the present disclosure for scanning may be implemented in the exemplary architecture shown in **Figure 3****.** For example, device **310** could be selected to perform the scanning, and then actually carry out the scanning process. Device **310** would identify WLAN network **300,** and in particular access point **306.** The results of the scan, which can include information on network **300** and access point **306,** such as a network identifier, WLAN profile, etc., would then be communicated to or otherwise shared with device **312.** This information would then enable device **312** to establish a connection with access point **306** without itself having to do any scanning for WLAN network **300.** Thus device **312** is able to preserve battery power that it would have otherwise expended in scanning for network **300.**

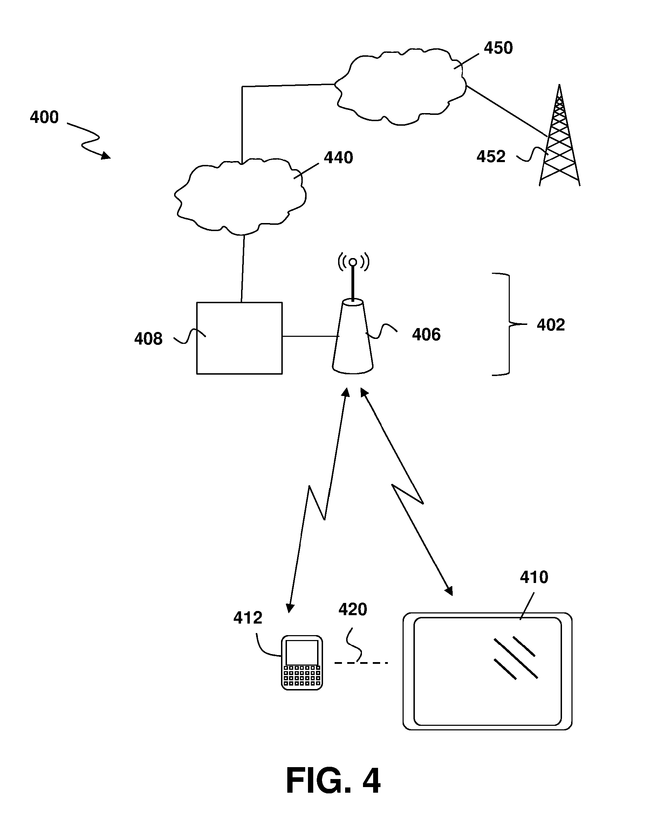

Reference is now made to **Figure 4****,** which shows a block diagram representing an exemplary telecommunications architecture **400** comprising a femtocell **402.** As will be appreciated by those skilled in the art, a femtocell is a user owned limited coverage area cellular base station that is connected to a telecommunications service provider's core network via the internet. In **Figure 4****,** femtocell **402** includes femtocell base station **406,** an internet modem **408,** and first and second wireless devices **410** and **412.** Internet modem provides an interface between base station **406** and the internet **440.** The service provider's core network **450** is connected to the internet **440.** Core network **450** comprises one or more base stations **452.**

Femtocell **402** may be configured in a number different ways. For example, the network can be configured in closed subscriber group (CSG) mode. In CSG mode, only specific users are permitted to use the femtocell resources. Alternatively, femtocell **402** could be configured in an Open Access mode, wherein all users may access the femtocell.

In addition to the elements shown in **Figure 4****,** telecommunications architecture **400** may also include other components. For example, a security gateway may exist between the internet and the provider's core network in order to secure the internet connection between a femtocell and the core network. In addition, the core network will typically have a femtocell device management system (FMS) for the provisioning, activation, and management of femtocells. Telecommunications architecture **400** may also have other components and connections. It is to be appreciated that telecommunications architecture **400** shown in **Figure 4** is merely exemplary. Neither its components nor its configuration is meant to be limiting.

The embodiments of the present disclosure may be implemented in a configuration such as the one depicted in **Figure 4****.** For example, when wireless devices **410** and **412** seek to establish a connection with access point **406** in femtocell **402,** the process of searching for one or more femtocell base station can be performed on only one of the devices. In the example shown in **Figure 4****,** the scanning device is device **410.** Once the scanning is complete, the results of the scan can be communicated from device **410** to device **412** via communication link **420** to enable device **412** to connect to femtocell base station **406** without itself having to perform any scanning.

The results of the scan can include information about any discovered femtocells. In the case where no femtocells were identified, the results can indicate this outcome. The information on the available femtocells may include an identifier of each femtocell. The information may also include other information for each available femtocell, such as for example connection and/or transmission parameters. In at least one embodiment of the present disclosure, the results will contain sufficient information on one or more of the available femtocells to enable the other (i.e. non-scanning device) to connect to one of the femtocells without having to perform any scanning on its own.

The arrangements depicted in **Figures 3** and **4** are only exemplary and are not meant to be limiting. Implementations of the present disclosure can be realized with many other radio access technologies and network architectures.

In addition to the foregoing, the present disclosure also contemplates one or more wireless devices capable of implementing at least part of one or more of the methods described above.

According to at least one aspect of the present disclosure, a wireless device is provided. The wireless device is capable of communicating with another wireless device. The wireless device comprises a processor, a memory storing therein computer readable instructions, and at least one wireless communication interface for communicating with one or more wireless networks. The processor is configured to execute the computer readable instructions to cause the wireless device to scan for wireless networks using the at least one wireless communication interface, and to communicate the results of the scan to the another wireless device. In at least one embodiment, rather than communicating the results to the other device, the device can merely make the results available to the other device.

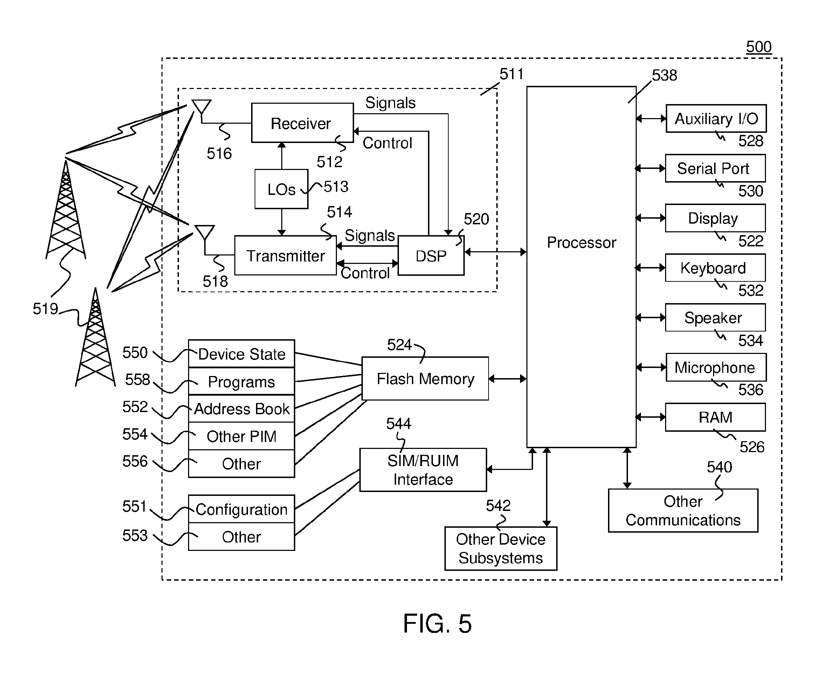

An example of such a wireless device is a mobile device depicted in **Figure 5****.** The mobile device of **Figure 5** is however not meant to be limiting and other wireless devices could also be used.

Mobile device **500** may comprise a two-way wireless communication device having any of voice capabilities, data communication capabilities, or both. Mobile device **500** generally has the capability to communicate with other devices or computer systems. Depending on the exact functionality provided, the mobile device may be referred to as a data messaging device, a two-way pager, a wireless e-mail device, a cellular telephone with data messaging capabilities, a wireless Internet appliance, a wireless device, a user equipment, a tablet, or a data communication device, as examples.

Where mobile device **500** is enabled for two-way communication, it may incorporate a communication subsystem **511,** including both a receiver **512** and a transmitter **514,** as well as associated components such as one or more antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Where mobile device **500** is enabled for two-way communication, it may incorporate a communication subsystem **511,** including both a receiver **512** and a transmitter **514,** as well as associated components such as one or more antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some networks, network access is associated with a subscriber or user of mobile device **500.** A mobile device may require a removable user identity module (RUIM) or a subscriber identity module (SIM) card in order to operate on the network. The SIM/RUIM interface **544** may be similar to a card-slot into which a SIM/RUIM card can be inserted and ejected like a diskette or PCMCIA card. The SIM/RUIM card can have memory and hold many key configuration **551,** and other information **553** such as identification, and subscriber related information.

When required network registration or activation procedures have been completed, mobile device **500** may send and receive communication signals over the network **519.** As illustrated in **Figure 5****,** network **519** can consist of multiple base stations communicating with the mobile device. For example, in a hybrid CDMA 1x EVDO system, a CDMA base station and an EVDO base station communicate with the mobile station and the mobile device is connected to both simultaneously. In other systems such as Long Term Evolution (LTE) or Long Term Evolution Advanced (LTE-A), multiple base stations may be connected to for increased data throughput. Other systems such as GSM, GPRS, UMTS, HSDPA, among others are possible and the present disclosure is not limited to any particular cellular technology.

Signals received by antenna **516** through communication network **519** are input to receiver **512,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** generally includes a processor **538** which controls the overall operation of the device. Communication functions, including data and voice communications, are performed through communication subsystem **511.** Processor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art having the benefit of the present disclosure.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list, among other applications.

Operating system software used by the processor **538** may be stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. The applications may be segregated based on the mode or category they fall into. Memory **524** may further provide security for corporate data and if some applications are locked while others are not.

Processor **538,** in addition to its operating system functions, may enable execution of software applications on the mobile device. A predetermined set of applications that control basic operations, including data or voice communication applications for example, will normally be installed on mobile device **500** during manufacturing. Other applications could be installed subsequently or dynamically.

Applications and software may be stored on any computer readable storage medium. The computer readable storage medium may be a tangible or intransitory/non-transitory medium such as optical (e.g., CD, DVD, etc.), magnetic (e.g., tape) or other memory known in the art.

One example software application may be a personal information manager (PIM) application having the ability to organize and manage data items relating to the user of the mobile device such as, but not limited to, email, calendar events, voice mails, appointments, and task items. Further applications, including, but not limited to, a media player, camera, messenger, mail, calendar, address book, web browser, social networking, game, electronic book reader, map, or other application may also be loaded onto the mobile device **500** through the network **519,** an auxiliary I/O subsystem **528,** serial port **530,** short-range communications subsystem **540** or any other suitable subsystem **542,** and installed by a user in the RAM **526** or a nonvolatile store (not shown) for execution by the processor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the processor **538,** which may further process the received signal for output to the display **522,** or alternatively to an auxiliary I/O device **528.**

A user of mobile device **500** may also compose data items such as email messages for example, using a keyboard **532,** which may comprise a virtual or physical keyboard or both, and may include a complete alphanumeric keyboard or telephone-type keypad, among others, in conjunction with the display **522** and possibly an auxiliary I/O device **528.** Such composed items may then be transmitted over a communication network through the communication subsystem **511.**

For voice communications, overall operation of mobile device **500** is similar, except that received signals would typically be output to one or more speakers **534** and signals for transmission would be generated by a microphone **536.** Alternative voice or audio I/O subsystems, such as a voice message recording subsystem, may also be implemented on mobile device **500.** Although voice or audio signal output may be accomplished primarily through the one or more speakers **534,** display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem. In addition, serial port **530** can be used to establish a communication link between two wireless devices, such as communication link **120** shown between devices **110** and **112** in **Figure 1****.** As described above, serial port **530** can support any type of serial communication, including but not limited to USB.

Other communications subsystems **540,** such as a short-range communications subsystem, are further optional components which may provide for communication between mobile device **500** and different systems or devices, which need not necessarily be similar devices. For example, the subsystem **540** may include an infrared device and associated circuits and components, near field communications (NFC) or a Bluetooth™ communication module to provide for communication with similarly enabled systems and devices. Subsystem **540** can be used to establish a communication link between device **500** and another wireless device, such as communication link **120** between devices **110** and **112** in **Figure 1****.**

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein

Moreover, the previous detailed description is provided to enable any person skilled in the art to make or use the present disclosure. Various modifications to those embodiments will be readily apparent to those skilled in the art, and the generic principles defined herein may be applied to other embodiments without departing from the scope of the disclosure described herein. Thus, the present disclosure is not intended to be limited to the embodiments shown herein, but is to be accorded the full scope consistent with the claims, wherein reference to an element in the singular, such as by use of the article "a" or "an" is not intended to mean "one and only one" unless specifically so stated, but rather "one or more". All structural and functional equivalents to the elements of the various embodiments described throughout the disclosure that are known or later come to be known to those of ordinary skill in the art are intended to be encompassed by the elements of the claims. Moreover, nothing disclosed herein is intended to be dedicated to the public regardless of whether such disclosure is explicitly recited in the claims.

## Claims

1. A method in a first wireless device (110), the method comprising:
recognizing a second wireless device (112);
identifying the first wireless device (110) as at least one selected device to perform wireless network scanning to discover available wireless networks;
performing the wireless network scanning (230); and
communicating (240) results of the scanning to the second wireless device (112), the results containing information to enable the second wireless device (112) to connect to at least one of the available wireless networks without the second wireless device (112) having to perform the same wireless network scanning.

2. The method of claim 1 wherein in the communicating step the results are communicated to the second wireless device (112) over a communication link (120, 320) between the first (110) and second (112) wireless devices.

3. The method of claim 1 or claim 2, further comprising selecting the first wireless device (110) as the at least one selected device to perform the wireless network scanning prior to performing the wireless network scanning.

4. The method of any one of claims 1 to 3, wherein the first wireless device (110) and second wireless device (112) share wireless network scanning.

5. The method of claim 3 wherein the selection is based on relative battery energy storage capacities or relative battery energy levels of the first (110) and second (112) wireless devices.

6. The method of any one of claims 1 to 5 wherein the wireless network scanning involves either active or passive scanning.

7. The method of any one of claims 1 to 6 further comprising, after the scanning, establishing a connection between the first wireless device (110) and at least one of the discovered available wireless networks using the results of the scanning.

8. The method of any one of claims 1 to 7 wherein the scanning proceeds only while a battery energy level of the first wireless device (110) is above a specific threshold.

9. The method of claim 8 wherein, during the scanning, if the battery energy level of the first wireless device (110) reaches or falls below the specific threshold, a scanning-ceased indicator is communicated to the second wireless device (112), the scanning-ceased indicator indicating to the second wireless device (112) that the wireless network scanning at the first wireless device (110) has ceased.

10. The method of any one of claims 1 to 9 further comprising, at some time before the communicating, receiving information on the wireless capabilities of the second wireless device (112).

11. The method of any one of claims 1 to 10 further comprising, at some time before the communicating, sending information on the wireless capabilities of the first wireless device (110) to the second wireless device (112).

12. A method in a first wireless device (110), the method comprising:
recognizing a second wireless device (112);
identifying the second wireless device (112) as at least one selected device to perform wireless network scanning to discover available wireless network; and
receiving results of wireless network scanning performed on the second wireless device (112), the results containing information enabling the first wireless device (110) to connect to at least one available wireless network discovered during the scanning without the first wireless device (110) having to perform the same wireless network scanning.

13. The method of claim 12 further comprising, after the receiving, connecting to at least one available wireless network discovered during the scanning using the results of the scanning.

14. The method of claim 12 or claim 13 further comprising, before the receiving, sending information on the wireless capabilities of the first wireless device (110) to the second wireless device (112).

15. A wireless device (110) comprising:
a processor (538);
a memory (524) storing therein computer readable instructions; and
at least one wireless communication interface (511, 540) for communicating with one or more wireless networks,
wherein the processor (538) is configured to execute the computer readable instructions to cause the wireless device (110) to execute the method of any one of claims 1 to 14.

## Patentansprüche

1. Verfahren in einer ersten Drahtlosvorrichtung (110), wobei das Verfahren Folgendes aufweist:
Erkennen einer zweiten Drahtlosvorrichtung (112),
Identifizieren der ersten Drahtlosvorrichtung (110) als mindestens eine ausgewählte Vorrichtung, um eine Drahtlosnetzabtastung durchzuführen, um verfügbare Drahtlosnetze aufzudecken,
Durchführen der Drahtlosnetzabtastung (230) und
Kommunizieren (240) von Ergebnissen der Abtastung an die zweite Drahtlosvorrichtung (112), wobei die Ergebnisse Information beinhalten, um die zweite Drahtlosvorrichtung (112) zu befähigen, sich mit mindestens einem der verfügbaren Drahtlosnetze zu verbinden, ohne dass die zweite Drahtlosvorrichtung (112) die gleiche Drahtlosnetzabtastung durchführen muss.

2. Verfahren nach Anspruch 1, wobei in dem Kommunizierensschritt die Ergebnisse an die zweite Drahtlosvorrichtung (112) über eine Kommunikationsverbindung (120, 320) zwischen der ersten (110) und der zweiten (112) Drahtlosvorrichtung kommuniziert werden.

3. Verfahren nach Anspruch 1 oder 2, ferner mit Auswählen der ersten Drahtlosvorrichtung (110) vor dem Durchführen der Drahtlosnetzabtastung als die mindestens eine ausgewählte Vorrichtung, welche die Drahtlosnetzabtastung durchführen soll.

4. Verfahren nach einem der Anspruch 1 bis 3, wobei die erste Drahtlosvorrichtung (110) und die zweite Drahtlosvorrichtung (112) eine Drahtlosnetzabtastung teilen.

5. Verfahren nach Anspruch 3, wobei die Auswahl auf einer relativen Batterieenergiespeicherkapazität oder einem relativen Batterieenergiepegel der ersten (110) und der zweiten (112) Drahtlosvorrichtung basiert.

6. Verfahren nach einem der Ansprüche 1 bis 5, wobei die Drahtlosnetzabtastung mit entweder aktivem oder passivem Abtasten einhergeht.

7. Verfahren nach einem der Ansprüche 1 bis 6, ferner mit Herstellen einer Verbindung zwischen der ersten Drahtlosvorrichtung (110) und mindestens einem der aufgedeckten verfügbaren Drahtlosnetze unter Verwendung der Ergebnisse des Abtastens nach dem Abtasten.

8. Verfahren nach einem der Ansprüche 1 bis 7, wobei das Abtasten nur voranschreitet, solange ein Batterieenergiepegel der ersten Drahtlosvorrichtung (110) über einem bestimmten Schwellenwert liegt.

9. Verfahren nach Anspruch 8, wobei während des Abtastens, wenn der Batterieenergiepegel der ersten Drahtlosvorrichtung (110) den bestimmten Schwellenwert erreicht oder unter diesen fällt, eine Abtasten-eingestellt-Angabe an die zweite Drahtlosvorrichtung (112) kommuniziert wird, wobei die Abtasten-eingestellt-Angabe der zweiten Drahtlosvorrichtung (112) angibt, dass die Drahtlosnetzabtastung an der ersten Drahtlosvorrichtung (110) eingestellt worden ist.

10. Verfahren nach einem der Ansprüche 1 bis 9, ferner mit Empfangen von Information über die Drahtlosfähigkeiten der zweiten Drahtlosvorrichtung (112) einige Zeit vor dem Kommunizieren.

11. Verfahren nach einem der Ansprüche 1 bis 10, ferner mit Senden von Information über die Drahtlosfähigkeiten der ersten Drahtlosvorrichtung (110) an die zweite Drahtlosvorrichtung (112) einige Zeit vor dem Kommunizieren.

12. Verfahren in einer ersten Drathlosvorrichtung (110), wobei das Verfahren Folgendes aufweist:
Erkennen einer zweiten Drahtlosvorrichtung (112),
Identifizieren der zweiten Drahtlosvorrichtung (112) als mindestens eine ausgewählte Vorrichtung, um eine Drahtlosnetzabtastung durchzuführen, um verfügbare Drahtlosnetze aufzudecken, und
Empfangen von Ergebnissen der auf der zweiten Drahtlosvorrichtung (112) durchgeführten Drahtlosnetzabtastung, wobei die Ergebnisse Information beinhalten, welche die erste Drahtlosvorrichtung (110) befähigt, sich mit mindestens einem verfügbaren Drahtlosnetz zu verbinden, das während des Abtastens aufgedeckt worden ist, ohne dass die erste Drahtlosvorrichtung (110) die gleiche Drahtlosnetzabtastung durchführen muss.

13. Verfahren nach Anspruch 12, ferner mit Verbinden nach dem Empfangen mit mindestens einem verfügbaren Drahtlosnetz, das während des Abtastens aufgedeckt wurde, unter Verwendung der Ergebnisse des Abtastens.

14. Verfahren nach Anspruch 12 oder 13, ferner mit Senden von Information über die Drahtlosfähigkeiten der ersten Drahtlosvorrichtung (110) an die zweite Drahtlosvorrichtung (112) vor dem Empfangen.

15. Drahtlosvorrichtung (110) mit:
einem Prozessor (538),
einem Speicher (524), der darin computerlesbare Anweisungen speichert, und
mindestens einer Drahtloskommunikationsschnittstelle (511, 540) zum Kommunizieren mit einem oder mehreren Drahtlosnetzen,
wobei der Prozessor (538) dazu konfiguriert ist, die computerlesbaren Anweisungen auszuführen, um die Drahtlosvorrichtung (110) zu veranlassen, das Verfahren nach einem der Ansprüche 1 bis 14 auszuführen.

## Revendications

1. Procédé mis en oeuvre sur un premier dispositif sans fil (110), le procédé comprenant les étapes consistant à :
reconnaître un second dispositif sans fil (112) ;
identifier le premier dispositif sans fil (110) comme étant au moins un dispositif sélectionné pour exécuter un balayage de réseaux sans fil afin de découvrir des réseaux sans fil disponibles ;
exécuter le balayage des réseaux sans fil (230) ; et
communiquer (240) les résultats du balayage au second dispositif sans fil (112), les résultats contenant des informations permettant au second dispositif sans fil (112) de se connecter à au moins un des réseaux sans fil disponibles sans que le second dispositif sans fil (112) doive effectuer le même balayage des réseaux sans fil.

2. Procédé selon la revendication 1, dans lequel, dans l'étape de communication, les résultats sont communiqués au second dispositif sans fil (112) sur une liaison de communication (120, 320) entre le premier dispositif sans fil (110) et le second dispositif sans fil (112).

3. Procédé selon la revendication 1 ou la revendication 2, comprenant en outre l'étape consistant à sélectionner le premier dispositif sans fil (110) comme ledit au moins un dispositif sélectionné pour exécuter le balayage des réseaux sans fil avant d'effectuer le balayage des réseaux sans fil.

4. Procédé selon l'une quelconque des revendications 1 à 3, dans lequel le premier dispositif sans fil (110) et le second dispositif sans fil (112) partagent le balayage des réseaux sans fil.

5. Procédé selon la revendication 3, dans lequel la sélection est fondée sur des capacités relatives de stockage d'énergie de la batterie ou des niveaux relatifs d'énergie de la batterie du premier dispositif sans fil (110) et du second dispositif sans fil (112).

6. Procédé selon l'une quelconque des revendications 1 à 5, dans lequel le balayage des réseaux sans fil comprend un balayage soit actif, soit passif.

7. Procédé selon l'une quelconque des revendications 1 à 6, comprenant en outre, après l'étape de balayage, l'étape consistant à établir une connexion entre le premier dispositif sans fil (110) et au moins un des réseaux sans fil disponibles ainsi découverts à l'aide des résultats du balayage.

8. Procédé selon l'une quelconque des revendications 1 à 7, dans lequel le balayage ne se produit que tant que le niveau d'énergie de la batterie du premier dispositif sans fil (110) est supérieur à un seuil spécifique.

9. Procédé selon la revendication 8, dans lequel, pendant le balayage, si le niveau d'énergie de la batterie du premier dispositif sans fil (110) atteint le seuil spécifique ou chute au-dessous, un indicateur de cessation de balayage est envoyé au second dispositif sans fil (112), l'indicateur de cessation de balayage indiquant au second dispositif sans fil (112) que le balayage des réseaux sans fil a cessé sur le premier dispositif sans fil (110).

10. Procédé selon l'une quelconque des revendications 1 à 9, comprenant en outre, un certain temps avant la communication, l'étape consistant à recevoir des informations sur les capacités de communication sans fil du second dispositif sans fil (112).

11. Procédé selon l'une quelconque des revendications 1 à 10, comprenant en outre, un certain temps avant la communication, l'étape consistant à envoyer au second dispositif sans fil (112) des informations sur les capacités de communication sans fil du premier dispositif sans fil (110).

12. Procédé mis en oeuvre sur un premier dispositif sans fil (110), le procédé comprenant les étapes consistant à :
reconnaître un second dispositif sans fil (112) ;
identifier le second dispositif sans fil (112) comme étant au moins un dispositif sélectionné pour exécuter un balayage de réseaux sans fil afin de découvrir des réseaux sans fil disponibles ; et
recevoir les résultats du balayage des réseaux sans fil effectué sur le second dispositif sans fil (112), les résultats contenant des informations permettant au premier dispositif sans fil (110) de se connecter à au moins un des réseaux sans fil disponibles découverts dans le balayage sans que le premier dispositif sans fil (110) doive effectuer le même balayage des réseaux sans fil.

13. Procédé selon la revendication 12, comprenant en outre, après l'étape de réception, l'étape consistant à se connecteur à au moins un des réseaux sans fil disponibles ainsi découverts dans le balayage, à l'aide des résultats du balayage.

14. Procédé selon la revendication 12 ou la revendication 13, comprenant en outre, avant l'étape de réception, l'étape consistant à envoyer au second dispositif sans fil (112) des informations sur les capacités de communication sans fil du premier dispositif sans fil (110).

15. Dispositif sans fil (110) comprenant :
un processeur (538) ;
une mémoire (524) stockant des instructions lisibles par ordinateur ; et
au moins une interface de communication sans fil (511, 540) destinée à communiquer avec un ou plusieurs réseaux sans fil ;
dans lequel le processeur (538) est configuré pour exécuter les instructions lisibles par ordinateur afin de commander au dispositif sans fil (110) d'exécuter le procédé selon l'une quelconque des revendications 1 à 14.
